# EUROPÄISCHE PATENTANMELDUNG

(11) **EP 0 531 671 A2**
(43) Veröffentlichungstag der Anmeldung: **17.03.1993**
(21) Anmeldenummer: 92112299.0
(22) Anmeldetag: 18.07.1992
(51) Int. Cl.: G06F 12/14

(54) **Speicherkarte für Computer, Verfahren zu deren Herstellung und Verfahren zum Schutz von Software unter Verwendung dieser Karte**

(30) Priorität: 12.08.1991 DE 9109977 U
(71) Anmelder: INTELLIGENT SOLUTION SERVICES GmbH, D-85417 Marzling (DE)
(72) Erfinder: Walters, Kenn D., Dr., W-8011 Vaterstetten (DE)
(74) Vertreter: KUHNEN, WACKER & PARTNER

(57) **Zusammenfassung**

Speicherkarte als Massenspeichereinrichtung für EDV-Anlagen mittels der die unberechtigte Nutzung darauf gespeicherter Software verhindert wird. In der Speicherkarte wird eine die Speicherkarte und/oder die EDV-Anlage und/oder den Hersteller identifizierende Schutzkennung nicht veränderbar abgespeichert. Das zu schützende Softwareprogramm wird durch eine Schutzroutine ergänzt, die zur eigentlichen Programmausführung nur verzweigt, wenn eine in der Schutzroutine enthaltene Vergleichskennung mit der auf der Speicherkarte unveränderbar abgespeicherten Schutzkennung übereinstimmt.

## Beschreibung

Die Erfindung betrifft eine Massenspeichereinrichtung für EDV-Anlagen in der Form von sogenannten Speicherkarten auf der Basis von Halbleiterspeicher-ICs, wie sie insbesondere in Laptop-, Notebook- oder Palmtop-Computern als Ersatz für Disketten oder Festplatten verwendet werden.

Die zwischenzeitlich durch JEIDA (= Japan Electronic Industry Development Association) oder PCMCIA (= Personal Computer Memory Card International Association) normierten und standardisierten Speicherkarten zeichnen sich im Vergleich zu Disketten bzw. Festplatten durch ihre geringe Größe, Robustheit, Handlichkeit und um Größenordnung höhere Verarbeitungsgeschwindigkeiten aus. Speicherkarten nach dem PCMCIA-Standard, auf dem sich die führenden Hardware- und Software-Hersteller der Welt zwischenzeitlich geeinigt haben, bieten die Möglichkeit unterschiedliche Halbleiter-Speichertechnologien für diese Speicherkarten zu verwenden. Die mittlere Zugriffszeit derartiger Speicherkarten liegt bei der Verwendung von SRAM-Bausteinen im Bereich von 100 bis 200 ns. während Diskettenlaufwerke einige 100 ms. benötigen.

Da diese Speicherkarten als Ersatz für Disketten und Festplatten konzipiert wurden, weisen sie auch einen Nachteil dieser bekannten Systeme auf, nämlich der fehlende Schutz gegen unberechtigtes Kopieren. Unter Berücksichtigung der enormen Schäden, die der Wirtschaft durch unberechtigtes Kopieren und Software-Piraterie entstehen, ist verständlich, daß verschiedenartige Anstrengungen unternommen worden sind um Software zu schützen bzw. unberechtigtes Kopieren zu verhindern. In den einschlägigen Fachkreisen ist allgemein anerkannt, daß Software nicht hinreichend Software schützen kann. In die Software eingearbeitete Schutzroutinen oder - programme die auf dem gleichen Speichermedium gespeichert sind wie das zu schützende Programm können keinen vollständigen Schutz bieten, da sich derartige Disketten beispielsweise durch bit-weises kopieren unberechtigterweise kopieren lassen. Andererseits können auch Schutzprogramme, die auf der jeweiligen DV-Anlage installiert sind nur davor schützen, daß eine bestimmte Anwender-Software nicht auf einer Maschine eines anderen Typs ablauffähig ist; der Ablauf der zu schützenden Software auf eine DV-Anlage des gleichen Typs kann damit nicht verhindert werden.

Eine Lösung dieses Problems im Personalcomputerbereich ist die Verwendung eines sogenannten "Dongle". Ein "Dongle" ist ein Stecker mit einem darin integrierten elektronischen Schaltkreis, der üblicherweise auf die Parallel-Schnitt-stelle des PC's gesteckt wird. Der elektronische Schaltkreis des Dongle beinhaltet einen Code, der elektronisch nicht kopierbar und veränderbar ist. Dieser Code wird durch eine spezielle Autorisierungsroutine, des geschützten Anwenderprogramms gelesen, wenn dieses Anwenderprogramm aufgerufen wird. Falls dieser Code nicht gefunden wird, z. B. weil der "Dongle" nicht auf die parallele Schnittstelle des PC's aufgesteckt worden ist, ist das Anwenderprogramm nicht ablauffähig.

Bei sogenannten "Palmtop-" und "Notebook-"PCs ist dies häufig kein gangbarer Weg zum Schutz der Software, da derartige "Dongles" zum Teil zu groß und zu teuer für diese Art von PCs sind und darüberhinaus derartige PCs häufig keine oder nicht-standardisierte parallele Schnittstellen aufweisen (beispielsweise hat der HP95LX keine parallele Schnittstelle).

Es ist daher Aufgabe der vorliegenden Erfindung eine Speicherkarten für PCs zur Verfügung zu stellen, die gegen unberechtigtes Kopieren der auf der Speicherkarte gespeicherten Daten und Programme geschützt sind bzw. die auf ihnen gespeicherte Daten und Programme gegen unberechtigte Nutzung schützen. Weiter ist es Aufgabe der der vorliegenden Erfindung ein Verfahren zur Herstellung dieser Speicherkarten anzugeben. Desweiteren ist es Aufgabe der vorliegenden Erfindung ein Verfahren zum Schutz von Software gegen unberechtigte Nutzung unter Verwendung einer solchen Speicherkarte anzugeben.

Die Lösung dieser Aufgabe erfolgt durch eine Speicherkarte gemäß den Merkmalen des Anspruchs 1 bzw. durch ein Verfahren gemäß den Ansprüchen 7 oder 8.

Gemäß der vorliegenden Erfindung wird eine Massenspeicher-Einrichtung für EDV-Anlagen - eine sogenannte Speicherkarte oder Memory-Card - bereitgestellt, die eine Lese-Schreib-Speichereinrichtung für Daten und Programme, eine Steuereinrichtung zum Ansteuern der Speichereinrichtungen und eine Anschlußvorrichtung zum Verbinden der Speicherkarte mit einer EDV-Anlage aufweist. Mittels der unveränderbar und nur lesbar auf der Speicherkarte abgespeicherten Schutzkennung ist ein zuverlässiger Schutz gegen unberechtigte Nutzung von auf der Speicherkarte gespeicherten Daten und/oder Programmen gewährleistet. Das zu schützende Programm bzw. die zu schützende Software wird hierbei um eine Schutzroutine ergänzt, die durch den Aufruf des zu schützenden Anwenderprogramms aktiviert wird. Die Schutzroutine liest die Schutzkennung aus der Speicherkarte aus und vergleicht sie mit einer Vergleichskennung, die Bestandteil der Schutzroutine selbst ist bzw. zusammen mit der Schutzroutine und dem geschützten Anwenderprogramm abgespeichert ist. Nur wenn diese beiden Kennungen übereinstimmen, verzweigt die Schutzroutine zur eigentlichen Programmausführung. Stimmt die Schutzkennung nicht mit der Vergleichskennung überein, wird die Programmausführung ggfs. unter Ausgabe einer entsprechenden Fehlermeldung abgebrochen. Hierbei kann die Vergleichskennung integraler Bestandteil der Schutzroutine selbst sein oder sie wird alternativ in der Lese/Schreib-Speichereinrichtung abgespeichert.

Eine auf diese Weise geschützte Software kann zwar ohne weiteres auf eine Diskette oder eine Festplatte kopiert werden, die Kopie ist jedoch nicht mehr ablauffähig. Beim Aufruf bzw. beim Starten des geschützten Programms führt der Versuch, die Schutzkennung aus dem Nur-Lese-Speicherbereich auszulesen, zu einer Fehlermeldung und damit zum Abbruch des Programmes, da bei Disketten und Festplatten kein entsprechender Nur-Lese-Speicher vorhanden ist. Auch wenn das derart geschützte Programm auf eine andere Speicherkarte kopiert wird, ist es dort nicht mehr ablauffähig, da die in der Schutzroutine enthaltene Vergleichskennung nicht mit der Schutzkennung der neuen Speicherkarte übereinstimmt.

Gemäß einer vorteilhaften Ausgestaltung der Erfindung, ist zur Speicherung der Schutzkennung ein Nur-Lese-Speichereinrichtung in Form eines speziellen Bausteins vorgesehen, auf die durch die standardisierte Hardware-Umgebung in der die Speicherkarten eingesetzt werden, nicht unmittelbar zugegriffen werden kann (Anspruch 2). Nur mittels der speziellen Schutzroutinen kann die Schutzkennung aus diesem separaten Baustein ausgelesen werden. Auf diese Weise wird zuverlässig verhindert, daß die Schutzkennung in einer standardisierten Hardware-Umgebung verändert oder manipuliert wird. Besonders vorteilhaft ist hierbei auch, das vorhandene FORMAT- und COPY-Befehle nicht verändert werden müssen, um zu verhindern, daß auf die spezielle Nur-Lese-Speichereinrichtung mit der Schutzkennung zugegriffen wird.

Gemäß einer bevorzugten Ausführungsform der Erfindung entspricht die Speicherkarte dem PCMCIA-JEDA-Standard (Anspruch 3). Dieser Standard bzw. die zugehörige Spezifikation liegt mittlerweile als Release 2.0 vom August 1991 vor. Sofern die erfindungsgemäßen Speicherkarten diesem Standard entsprechen, ist ihre universelle Einsetzbarkeit gewährleistet, da sich dieser Standard immer mehr durchzusetzen beginnt.

Gemäß einer weiteren vorteilhaften Weiterbildung der Erfindung sind die verschiedenen Kennungen in codierter bzw. chiffrierter Form abgespeichert, wobei die Decodierung nur durch die jeweilige zu schützende Anwender-Software bzw. die darin enthaltene Schutzroutine erfolgen kann (Anspruch 4).

Gemäß einer vorteilhaften Ausgestaltung der Erfindung beinhaltet die Schutzkennung wahlweise oder in Kombination einen die Karte identifizierenden Code, einen die Datenverarbeitungsanlage (auf der die Speicherkarte eingesetzt werden kann bzw. werden darf) identifierzenden Code und/oder einen dem Hersteller der Speicherkarte identifizierenden Code (Anspruch 5). Soll beispielsweise sichergestellt werden, daß eine bestimmte Anwendersoftware nur in Kombination mit der Speicherkarte verwendet wird, so genügt es, wenn die Schutzkennung einen die jeweilige Speicherkarte identifizierenden Code umfaßt. Das zu schützende Programm umfaßt eine spezielle Schutzroutine, die auf diese Schutzkennung zugreift und das eigentliche Anwenderprogramm nur startet, wenn diese Schutzkennung korrekt gelesen wird, d. h. wenn eine autorisierte Speicherkarte verwendet wird. Wenn hingegen die Schutzkennung eine den PC identifizierende Kennung umfaßt, auf der das Programm ablauffähig sein soll, so kann das Ablaufen des Programms auf einen ganz bestimmten PC eingeschränkt werden. Alternativ kann auch eine den Anwender identifizierende Schutzkennung vorgesehen werden, wenn ein bestimmtes Programm für einen bestimmten Anwender autorisiert werden soll unabhängig von der Anzahl der Kopien bzw. der Anzahl der Datenverarbeitungsanlagen auf denen dieses Programm verwendet wird.

Durch das Herstellungsverfahren nach Anspruch 7 wird kostengünstig eine erfindungsgemäße Speicherkarte bereitgestellt. Durch das physikalische Durchtrennen bzw. Abtrennen der Schreibleitung zu dem Speicherbaustein mit der Schutzkennung werden Softwaremanipulationen an der Schutzkennung zuverlässig verhindert.

Weitere Einzelheiten, Aspekte und Vorteile der vorliegenden Erfindung ergeben sich aus der nachfolgenden Beschreibung unter Bezugnahme auf die Zeichnung.

Es zeigt:
- Fig. 1: ein Blockschaltbild einer ersten Ausführungsform der erfindungsgemäßen Speicherkarte,
- Fig. 2: eine schematische Darstellung einer zweiten Ausführungsform einer Speicherkarte nach dem PCMCIA-Standard gemäß der vorliegenden Erfindung,
- Fig. 3: eine Fig. 2 entsprechende Darstellung einer dritten Ausführungsform der Erfindung,
- Fig. 4: eine schematische Darstellung des Speicherinhalts einer erfindungsgemäßen Speicherkarte, und
- Fig. 5: ein Flußdiagramm zu Erläuterung des Verfahrens zum Schutz von Software gegen unberechtigte Nutzung gemäß der vorliegenden Erfindung.

Bei der nachfolgenden Beschreibung bevorzugter Ausführungsformen werden einander entsprechende Bauteile mit den gleichen Bezugszeichen bezeichnet.

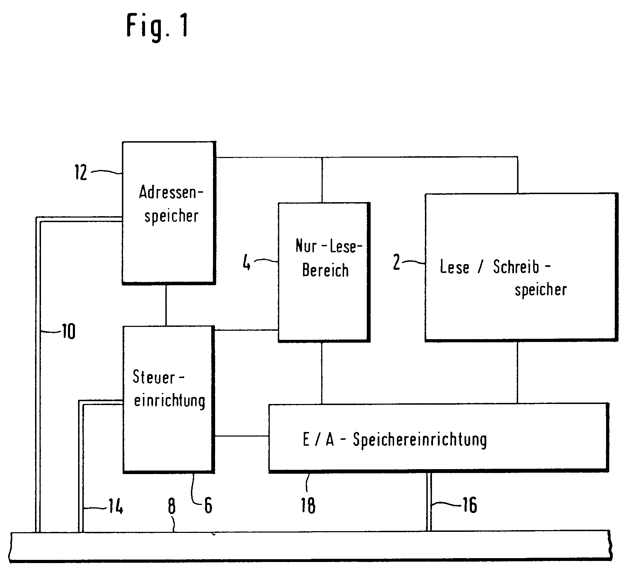

Fig. 1 zeigt ein Blockschaltbild einer ersten Ausführungsform der erfindungsgemäßen Speicherkarte. Die Speicherkarte umfaßt eine Schreib-Lese-Speichereinrichtung 2, eine Nur-Lese-Speichereinrichtung 4, eine Steuereinrichtung 6 zum Ansteuern der Speichereinrichtungen 2 und 4 und eine Anschlußvorrichtung 8 zum Verbinden der Speicherkarte mit einer EDV-Anlage. Die Anschlußvorrichtung 8 ist über einen Adreß-Bus 10 mit einer Adreß-Speichereinrichtung 12 bzw. mit einem Adreß-Puffer bzw. Adreß-Zwischenspeicher verbunden. Durch einen Steuerbus 14 ist die Anschlußvorrichtung 8 mit der Steuereinrichtung 6 verbunden und durch einen Datenbus 16 ist die Anschlußvorrichtung 8 mit einer Ein/Ausgabe-Speichereinrichtung 18 verbunden. Die Schreib-Lese-Speichereinrichtung 2 und die Nur-Lese-Speichereinrichtung 4 werden über die Adreß-Speichereinrichtung 12 adressiert. Über den Datenbus 16 und die E/A-Speichereinrichtung 18 können Daten in die Schreib-Lese-Speichereinrichtung 2 eingeschrieben bzw. ausgelesen werden. Durch über den Steuerbus 14 der Steuereinrichtung 6 zugeführte Signale erfolgt die Ablaufsteuerung der Speicherkarte.

Die Schreib-Lese-Speichereinrichtung 2, die Adreß-Speichereinrichtung 12 und die E/A-Speichereinrichtung 18 können mit SRAM- oder DRAM-Bausteinen realisiert sein. In der Nur-Lese-Speichereinrichtung 4 ist die Schutzkennung unveränderbar abgespeichert. Die Nur-Lese-Speichereinrichtung 4 kann daher beispielsweise in Form eines ROM-, eines OTP- (One Time Programmable), eines Flash-EPROM- oder eines EEPROM-Bausteines realisiert sein. Sofern die Nur-Lese-Speichereinrichtung in Form eines EEPROM bzw. Flash-Bausteins realisiert ist, werden die Schreibzuleitungen zu dem Baustein nach dem Einschreiten der Schutzkennung physikalisch durchgetrennt, so daß ein Löschen oder Verändern der abgespeicherten Schutzkennung nicht mehr möglich ist.

Die Steuereinrichtung 6 ist so ausgelegt, daß durch die standardisierte Hardware-Umgebung, in der die Speicherkarten eingesetzt werden, ein unmittelbarer Zugriff auf die Schutzkennung in der Nur-Lese-Speichereinrichtung 4 nicht möglich ist. Vielmehr ist der Zugriff auf die Schutzkennung nur mittels spezieller Schutzprogrammroutinen möglich.

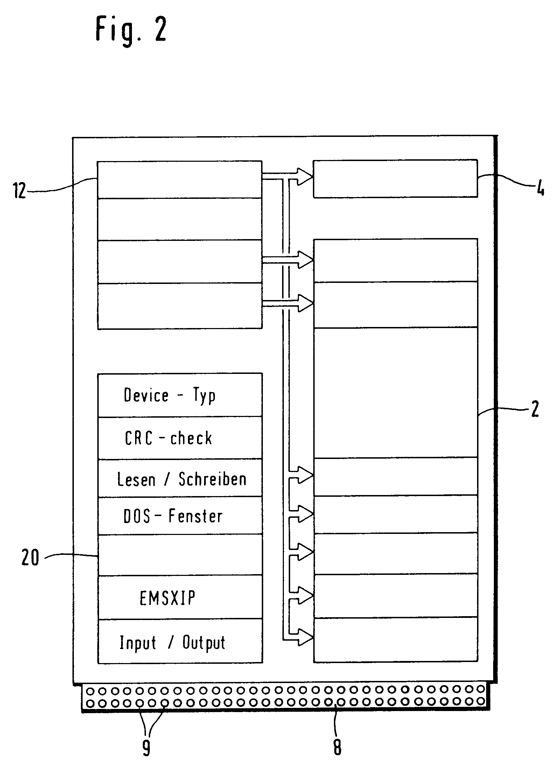

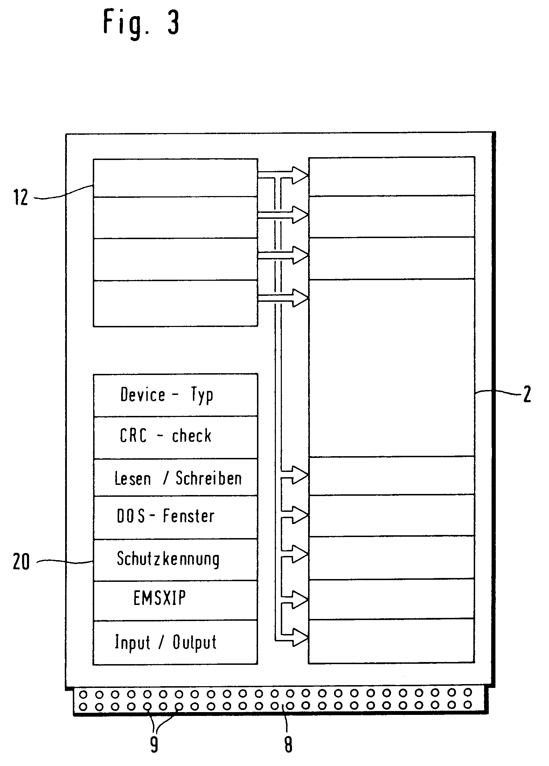

Bei den nachfolgend beschriebenen Ausführungsformen der erfindungsgemäßen Speicherkartne nach Fig. 2 und Fig. 3 handelt es sich um Speicherkarten nach dem sogenannten PCMCIA-bzw. JEIDA-Standard. Die zugehörige Spezifikation liegt zwischenzeitlich als PCMCIA-Spezifikation Relais 2.0 vom August 1991 vor. Durch diesen Standard werden unterschiedliche Ausführungsformen bzw. Speicherstrukturen und Speichertechnologien unterstützt. Einfachere Speicherkarten besitzen lediglich einen allgemein zugänglichen Lese-Schreib-Speicher in Form von Halbleiter-Speicherelementen mit einer zugehörigen Ansteuervorrichtung. Die Zuleitungen zu der Speicherkarte erfolgen über eine genormte 68-polige Steckerleiste bzw. Schnittstelle. Komplizierte Speicherkarten nach dem PCMCIA-Standard umfassen auch einen sogenannten Attributspeicher (CIS), der in spezielle Speichersegmente unterteilt ist, in denen Informationen zu der Karte selbst, der verwendeten Speichertechnologie, Betriebssystem-Spezifikationen etc. eingespeichert sind Beispielsweise ist es aufgrund dieses Attributspeichers auch möglich, derartige Speicherkarten als EMS-Speichererweiterungen zu nutzen, wodurch sich die sogenannte XIP-Fähigkeit (= Execute In Place) ergibt, d. h. auf der Speicherkarte gespeicherte Programme sind unmittelbar in der Speicherkarte ablauffähig und müssen nicht erst in den Hauptspeicher der zugehörigen EDV-Anlage bzw. des zugehörigen PC's geladen werden.

Zu Einzelheiten des Aufbaus und der Struktur des PCMCIA-Standards wird voll inhaltlich auf die Spezifikation Release 2.0 vom August 1991 und auf eine Beschreibung des PCMCIA-Standards in dem Artikel "Alles auf eine Karte" von Peter Lippert in der Zeitschrift "c't", Heft 4, 1991 bezug genommen.

In Fig. 2 ist schematisch eine zweite Ausführungsform der erfindungsgemäßen Speicherkarte dargestellt. Die Speicherkarte nach Fig. 2 unterscheidet sich von einer Speicherkarte nach dem PCMCIA/JEIDA-Standard mit Attributspeicher lediglich dadurch, daß ein zusätzlicher Speicherbaustein vorgesehen ist, in dem die Schutzkennung eingeschrieben ist, die Nur-Lese-Speichereinrichtung 4. Die Anschlußvorrichtung 8 liegt in Form der 68-poligen Steckerleiste nach dem PCMCIA-Standard an der Stirnseite der Speicherkarte vor. Da nach der zur Zeit geltenden PCMCIA-Spezifikation nicht alle 68 Anschlußpins der Steckerleiste 8 belegt sind, ist es möglich, einige der freien Pins als als E/A-Anschlüsse 9« für den Zugriff auf die Nur-Lese-Speichereinrichtung 4 zu verwenden. Da diese Anschlußpins nach der PCMCIA-Spezifikation nicht belegt sind, kann in einer standardisierten der PCMCIA-Spezifikation entsprechenden Hardware-Umgebung auch nicht auf diese Pins ohne weiteres zugegriffen werden. Damit ist auf einfache Weise gewährleistet, daß auf die Schutzkennung nur mittels spezieller Programmroutinen zugegriffen werden kann.

Alternativ lassen sich auch PCMCIA-Speicherkarten ohne Attributspeicher durch zusätzliche Bestückung mit einer Nur-Lese-Speichereinrichtung mit darin eingespeicherter Schutzkennung zu einer erfindungsgemäßen Speicherkarte umbauen.

Fig. 3 zeigt eine dritte Ausführungsform der erfindungsgemäßen Speicherkarte. Bei dieser Ausführungsform handelt es sich um eine dem PCMCIA-Standard entsprechende Speicherkarte mit Attributspeicher, wobei die Schutzkennung nicht in einem speziell hierfür vorgesehenen Nur-Lese-Speicher eingespeichert ist, sondern in speziell hierfür reservierten Bereichen des Attributspeichers 20. Bei den hierfür reservierten Bereichen handelt es sich um die ungeraden Bytes bzw. einen Teil der ungeraden Bytes des Attributspeichers 20, da nach der PCMCIA-Spezifikation nur die geraden Bytes des Attributspeichers belegt sind.

Die Schutzkennung umfaßt bei den einzelnen vorstehend erläuterten Ausführungsformen beispielsweise 8 Bytes umfassen, die das Vorhandensein, den Typ und den Aufbau der Schutzkennung beschreiben. Weitere 8 Bytes dienen zur Kennzeichnung des Herstellers der Speicherkarte, 8 Bytes dienen zur Identifizierung der jeweiligen Speicherkarte z. B. in Form einer Seriennummer und 8 Bytes können zur Identifizierung des Rechners bzw. der EDV-Anlage dienen, auf der die geschützte Software ablauffähig sein soll. 3 x 8 Bytes sind für beliebige Daten vorgesehen, die insbesondere zum Codieren bzw. Chiffrieren der gesamten Schutzkennung verwendet werden können. Die Schutzkennungsidentifizierung wird benutzt, um das Vorhandensein einer Schutzkennung, den Typ und die Version der Schutzkennungseinrichtung anzuzeigen. Die Herstellerkennung und die Speicherkartenkennung dient zum eindeutigen Identifizieren der jeweiligen Speicherkarte. Mit der Rechnerkennung kann sichergestellt werden, daß die geschützte Software nur auf einer bestimmten EDV-Anlage lauffähig ist. Die 3 x 8 Bytes zum Codieren und Decodieren der gesamten Schutzkennung erhöhen die Sicherheit des erfindungsgemäßen Verfahrens bzw. die Zuverlässigkeit der erfindungsgemäßen Speicherkarte. Bei Speicherkarten nach der PCMCIA-Spezifikation mit Attributspeicher wird durch die Codierung der Schutzkennung auch die sogenannte XIP-Fähigkeit (= Execute In Place) derartiger Speicherkarten nicht beeinträchtigt.

Es ist auch möglich, daß das BIOS des jeweiligen PC's eine Programmroutine zum Auslesen der speziellen Nur-Lese-Speichereinrichtung umfaßt. Diese Routinen werden zuerst versuchen diesen Speicherbereich einzuschreiben und erst wenn dies nicht gelingt, wird der Inhalt bzw. die Schutzkennung ausgelesen um zu gewährleisten, daß es sich um eine funktionsfähige Schutzkennung handelt.

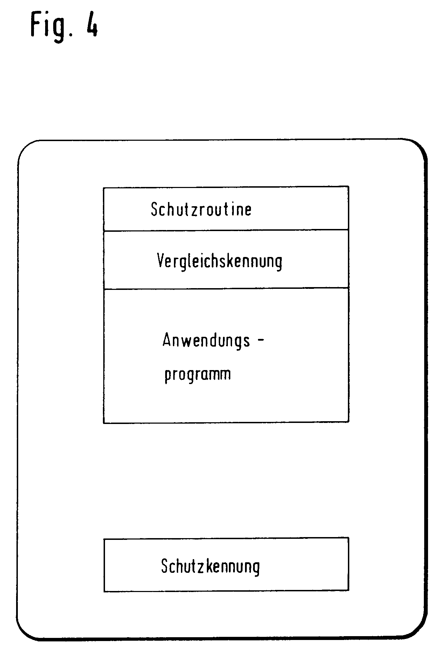

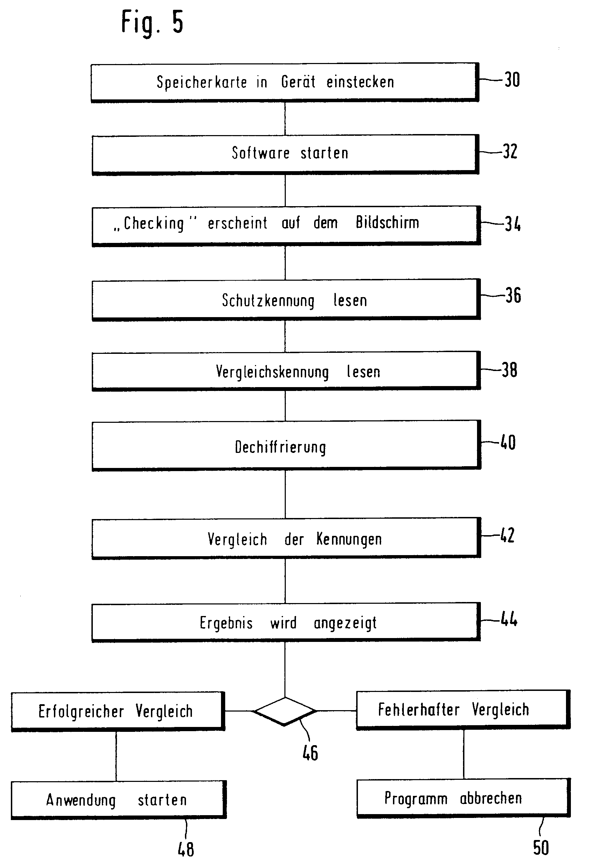

Nachfolgend wird unter Bezugnahme auf schematische Darstellung der Speicherbelegung in Fig. 4 und das Flußdiagramm in Fig. 5 die Funktionsweise der erfindungsgemäßen Speicherkarten bzw. des erfindungsgemäßen Verfahrens zum Schutz von Software gegen unberechtigte Nutzung erläutert. In der Schreib-Lese-Speichereinrichtung 2 einer erfindungsgemäßen Speicherkarte ist ein geschütztes Anwenderprogramm gespeichert. Zusätzlich ist eine dem Anwenderprogramm zugeordnete Schutzroutine und eine Vergleichskennung in der Schreib-Lese-Speichereinrichtung 2 abgespeichert. In der Nur-Lese-Speichereinrichtung 4 bzw. in einem speziell hierfür reservierten Bereich der Schreib-Lese-Speichereinrichtung (Ausführungsform nach Fig.3) ist die Schutzkennung unveränderbar abgespeichert. Sowohl die Schutzkennung als auch die Vergleichskennung sind vorzugsweise chiffriert abgespeichert.

Um ein bestimmtes Anwenderprogramm, das auf einer erfindungsgemäßen Speicherkarte abgespeichert ist zu starten, wird zunächst in einem Schritt 30 die Speicherkarte in den PC eingesteckt. In einem Schritt 32 wird das gewünschte Anwenderprogramm aufgerufen bzw. gestartet. In einem Schritt 34 erscheint auf dem Bildschirm eine Anzeige, mit der zum Ausdruck gebracht wird, daß überprüft wird, ob die Berechtigung zur Nutzung der gestarteten Software bzw. des gestarteten Anwenderprogramms vorliegt. In einem Schritt 36 wird die Schutzkennung ausgelesen. In einem Schritt 38 wird die Vergleichskennung ausgelesen. In einem Schritt 40 werden beide Kennungen decodiert bzw. dechiffriert. In einem Schritt 42 wird die dechiffrierte Vergleichskennung mit der dechiffrierten Schutzkennung verglichen. In einem Schritt 44 wird das Ergebnis dieses Vergleichs angezeigt. In einem Schritt 46 wird zur eigentlichen Programmausführung in Schritt 48 verzweigt, sofern Vergleichskennung und Schutzkennung übereinstimmen bzw. es wird zum Programmabbruch in einem Schritt 50 verzweigt, falls die beiden Schutzkennungen nicht übereinstimmen.

## Patentansprüche

1. Speicherkarte als Massenspeichereinrichtung für EDV-Anlagen, insbesondere für Palmtop-, Notebook- und Laptop-Computer, mit einer Lese/Schreib-Speichereinrichtung für Daten und Programme, einer Steuereinrichtung zum Ansteuern der Speichereinrichtung und einer Anschlußvorrichtung zum Verbinden der Speicherkarte mit der EDV-Anlage, dadurch gekennzeichnet, daß eine Schutzkennung unveränderbar auf der Speicherkarte abgespeichert ist.

2. Speicherkarte nach Anspruch 1, dadurch gekennzeichnet, daß die Schutzkennung in einer Nur-Lese-Speichereinrichtung abgespeichert ist.

3. Speicherkarte nach Anspruch 1 oder 2, dadurch gekennzeichnet, daß die Speicherkarte dem PCMCIA/JEIDA-Standard entspricht.

4. Speicherkarte nach wenigstens einem der vorhergehenden Ansprüche, dadurch gekennzeichnet, daß die Schutzkennung codiert bzw. chiffriert abgespeichert ist.

5. Speicherkarte nach wenigstens einem der vorhergehenden Ansprüche, dadurch gekennzeichnet, daß Schutzkennung eine die Speicherkarte und/oder die EDV-Anlage und/oder den Hersteller der Speicherkarte identifizierende Kennung umfaßt.

6. Speicherkarte nach wenigstens einem der vorhergehenden Ansprüche, dadurch gekennzeichnet, daß Speichereinrichtungen OTP-, ROM- SRAM-, DRAM-, FLASH-EPROM- oder EEPROM-Bausteine einzeln oder in Kombination umfassen.

7. Verfahren zum Herstellen einer Speicherkarte nach einem der Ansprüche 2 bis 6, gekennzeichnet durch folgende Verfahrensschritte:
Bereitstellen einer Speicherkarte mit einer ersten Lese/Schreib-Speichereinrichtung für Daten und Programme in der Form von Halbleiterspeicherbausteinen, einer zweiten Lese/Schreib-Speichereinrichtung in der Form von Halbleiterspeicherbausteinen, einer Steuereinrichtung zum Ansteuern der Speichereinrichtung und einer Anschlußvorrichtung zum Verbinden der Speicherkarte mit der EDV-Anlage,
Einspeichern einer Schutzkennung in die zweite Lese/Schreib-Speichereinrichtung, und
physikalisches Durchtrennen der Schreibzuleitungen zu der zweiten Speichereinrichtung.

8. Verfahren zum Schutz von Software gegen unberechtigte Nutzung mit folgenden Schritten:
Bereitstellen einer Speicherkarte, insbesondere nach einem der Ansprüche 1 bis 7, mit einer Schreib/Lese-Speichereinrichtung für Daten und Programme und einer auf der Speicherkarte unveränderbar abgespeicherten Schutzkennung;
Versehen des zu schützenden Anwenderprogramms mit einer Schutzroutine, die durch den Aufruf des zu schützenden Anwenderprogramms aktiviert wird und folgende Programmschritte umfaßt:
Lesen der in der Speicherkarte gespeicherten Schutzkennung,
Vergleichen der Schutzkennung mit einer dem zu schützenden Anwenderprogramm zugeordneten Verkleichskennung,
Abbruch der Programmausführung, falls die Vergleichskennung nicht mit der Schutzkennung übereinstimmt, oder
Verzweigung zu dem zu schützenden Anwenderprogramm, um dieses auszuführen, falls die Vergleichskennung mit der Schutzkennung übereinstimmt, und
Speichern des modifizierten zu schützenden Anwenderprogramms auf der Speicherkarte.

9. Verfahren nach Anspruch 8, dadurch gekennzeichnet, daß die Schutzkennung und/oder die Vergleichskennung chiffriert vorliegt.
